# EUROPÄISCHE PATENTSCHRIFT

(11) **EP 3 268 822 B1**
(45) Veröffentlichungstag und Bekanntmachung des Hinweises auf die Patenterteilung: **19.01.2022**
(21) Anmeldenummer: 16709443.2
(22) Anmeldetag: 11.03.2016
(51) Int. Cl.: G05B 19/042

(54) **PROJEKTGERÄT UND VERFAHREN ZUM KONFIGURIEREN UND/ODER PARAMETRIEREN VON AUTOMATISIERUNGSKOMPONENTEN EINES AUTOMATISIERUNGSSYSTEMS**
PROJECTING DEVICE AND METHOD FOR CONFIGURING AND/OR PARAMETERISING AUTOMATION COMPONENTS OF AN AUTOMATION SYSTEM
APPAREIL D'ÉTABLISSEMENT DE PROJET ET PROCÉDÉ POUR CONFIGURER ET/OU PARAMÉTRER DES COMPOSANTS D'AUTOMATISATION D'UN SYSTÈME D'AUTOMATISATION

(30) Priorität: 13.03.2015 DE 102015103727
(43) Veröffentlichungstag der Anmeldung: 17.01.2018
(73) Patentinhaber: Phoenix Contact GmbH & Co. KG, 32825 Blomberg (DE)
(72) Erfinder: HEINES, Benno, 32760 Detmold (DE); BRUNE, Philipp, 33818 Leopoldshöhe (DE); FREITAG, Gerhard, 32758 Detmold (DE)
(74) Vertreter: Blumbach · Zinngrebe Patentanwälte PartG mbB
(86) Internationale Anmeldenummer: PCT/EP2016/055245
(87) Internationale Veröffentlichungsnummer: WO 2016/146506

(56) Entgegenhaltungen:
- EP-A1- 2 490 372
- US-A1- 2010 064 297
- US-A1- 2012 029 661
- US-A1- 2014 053 165
- US-B2- 7 289 994

## Beschreibung

Die Erfindung betrifft ein Projektiergerät sowie ein Verfahren für das Konfigurieren und/oder Parametrieren von Automatisierungskomponenten eines Automatisierungssystems. Automatisierungslösungen in der Fabrikautomation, Prozessindustrie und dem Maschinenbau werden heute in vielen Fällen mit industriellen Netzwerken wie Feldbussen oder Industrial Ethernet realisiert. Diese Netzwerke ermöglichen eine bedarfsgerechte Zusammenstellung und Anordnung einer Anzahl von Geräten und Steuerungen, nachfolgend als Automatisierungskomponenten bezeichnet, zu einem Automatisierungssystem. Die Automatisierungskomponenten sind dann gleichzeitig auch Netzwerkkomponenten und müssen das jeweilige Netzwerkprotokoll unterstützen, damit sie über das Netzwerk Daten untereinander austauschen können.

Die Auswahl, Zusammenstellung und Anordnung der Automatisierungskomponenten zu einem Automatisierungssystem erfolgt üblicherweise mittels eines Engineeringwerkzeugs an einem Projektiergerät, wie aus EP 2 490 372 A1 bekannt ist, das hierzu eine Benutzerschnittstelle aufweist. Dabei wird eine Konfiguration und/oder Parametrierung für das Automatisierungssystem und dessen Komponenten erstellt. Die Konfiguration und/oder Parametrierung umfasst in der Regel sowohl spezifische Eigenschaften und Einstellungen des verwendeten industriellen Netzwerks als auch der verwendeten Automatisierungskomponenten und kann dabei einen hohen Komplexitätsgrad erreichen, insbesondere dann, wenn zum Beispiel mehrere Netzwerkprotokolle zu beachten sind und/oder das Netzwerk eine Kombination von Feldbussen wie INTERBUS und Industrial Ethernet wie PROFINET umfasst. Zudem hängt der Komplexitätsgrad auch von der Art und Anzahl der verwendeten Automatisierungskomponenten ab.

Wenn die erforderlichen Automatisierungskomponenten auch tatsächlich vorhanden und an das Netzwerk angebunden sind, kann die mit dem Engineeringwerkzeug erstellte Konfiguration und/oder Parametrierung aus dem Engineeringwerkzeug, welches mit dem Netzwerk in Verbindung steht, auf die tatsächlichen Komponenten geladen werden. Hierzu werden die Konfigurations- und/oder Parametrierungsdaten mittels des Engineeringwerkzeugs zunächst in ein für die Automatisierungskomponenten geeignetes Format umgewandelt und/oder kompiliert, damit sie nach der Übertragung von den Automatisierungskomponenten interpretiert, angewandt und/oder ausgeführt werden können.

Üblicherweise erfolgt im Zuge des Konfigurierens und/oder Parametrierens und vor allem vor der Übertragung der Konfigurations- und/oder Parametrierungsdaten eine Analyse des Automatisierungssystems dahingehend, ob alle erforderlichen Komponenten auch tatsächlich vorhanden bzw. erreichbar und ob sie für die vorgesehene Konfiguration und/oder Parametrierung auch geeignet sind. Das Ergebnis der Analyse wird von dem Engineeringwerkzeug angezeigt. Hat die Analyse Fehler oder Probleme ergeben, sind diese zunächst zu korrigieren, bevor die Konfigurations- und/oder Parametrierungsdaten auf die Automatisierungskomponenten geladen werden können.

Das Umwandeln der Konfigurations- und/oder Parametrierungsdaten, das Analysieren des Automatisierungssystems, das Übertragen der umgewandelten Konfigurations- und/oder Parametrierungsdaten an die Automatisierungskomponenten sowie das Anwenden bzw. Ausführen der Daten durch die Automatisierungskomponenten sind Vorgänge die ein Anwender heute in der Regel manuell starten muss.

Da die erstellte Konfiguration und/oder Parametrierung, wie eingangs bereits erwähnt, oftmals einen hohen Komplexitätsgrad aufweisen, benötigt das Umwandeln bzw. Kompilieren der entsprechenden Konfigurations- und/oder Parametrierungsdaten teilweise erhebliche Rechenleistung und/oder -zeit. Dadurch ist vom Starten des Kompilierens bis zum Laden der erzeugten Daten auf die Automatisierungskomponenten üblicherweise mit einer nicht unerheblichen Wartezeit zu rechnen. Eine mit dem Engineeringwerkzeug vorgenommene Änderung an der Konfiguration und/oder Parametrierung für ein Automatisierungssystem kann somit nur sehr verspätet tatsächlich wirken.

Eine Aufgabe der vorliegenden Erfindung besteht somit darin, zumindest einen dieser Vorgänge zu beschleunigen und für den Anwender komfortabler zu gestalten.

Die Aufgabe wird gelöst durch eine Vorrichtung bzw. das Projektiergerät mit den Merkmalen des unabhängigen Patentanspruchs 1 sowie durch ein Verfahren mit den Merkmalen des unabhängigen Patentanspruchs 13 Vorteilhafte Ausgestaltungen des erfindungsgemäßen Projektiergeräts sind in den abhängigen Patentansprüchen angegeben. Die dabei angegebenen Merkmale und Vorteile gelten sinngemäß auch für das erfindungsgemäße Verfahren.

Vorgeschlagen wird somit ein Projektiergerät zum Konfigurieren und/oder Parametrieren von Automatisierungskomponenten eines Automatisierungssystems. Das Projektiergerät weist eine Benutzerschnittstelle und einer Netzwerkschnittstelle auf, wobei es über letztere an ein Netzwerk eines tatsächlichen Automatisierungssystem anbindbar ist, und eignet sich zum Erstellen einer Soll-Konfiguration und/oder Soll-Parametrierung für ein Automatisierungssystem sowie zum Analysieren eines tatsächlichen Automatisierungssystems bezüglich dessen Ist-Konfiguration und/oder Ist-Parametrierung, sofern es über die Netzwerkschnittstelle angebundenen ist. Vor allem ist das Projektiergerät zweckmäßig aber erstens ausgebildet zum automatischen Erkennen von Zugriffen auf die Soll-Konfiguration und/oder die Soll-Parametrierung anhand vordefinierbarer Zugriffsarten und zweitens ausgebildet zum automatischen Auslösen und Durchführen des Analysierens in Reaktion auf einen erkannten Zugriff und/oder in Reaktion auf ein Signal, das ein vordefinierbar regelmäßig wiederkehrendes Signal ist. Als Erstellen gilt hierbei auch ein Ändern oder Bearbeiten einer Soll-Konfiguration. Als zu erkennende Arten von Zugriffen können zum Beispiel Anwenderzugriffe als solche oder Anwenderzugriffe auf bestimmte Geräte, Parameter oder Eigenschaften definiert sein. Durch eine entsprechende Definition der relevanten Zugriffsarten kann auch selektiv mit Zugriffen auf die Soll-Konfiguration und/oder Soll-Parametrierung umgegangen werden. So können bestimmte Zugriffe eine direkte Auswirkung und andere Zugriffe hingegen gar keine auslösen. Alternativ oder ergänzend kann eine Analyse auch zum Beispiel in einem vordefinierten Zyklus ausgelöst und durchgeführt werden. Vorzugsweise umfasst das Analysieren auch gleich das Auswerten der ermittelten Informationen. Ferner wird ein Verfahren zum Konfigurieren und/oder Parametrieren von Automatisierungskomponenten eines Automatisierungssystem vorgeschlagen, wobei das Verfahren zur Durchführung mittels des Projektiergeräts vorgesehen ist und die folgenden Schritte umfasst:
- Anbinden eines Netzwerks eines tatsächlichen Automatisierungssystems,
- Erstellen einer Soll-Konfiguration und/oder Soll-Parametrierung für ein Automatisierungssystem,
- automatisches Erkennen von Zugriffen auf die Soll-Konfiguration und/oder die Soll-Parametrierung anhand vordefinierter Zugriffsarten, und
- automatisches Auslösen und Durchführen des Analysierens des angebundenen tatsächlichen Automatisierungssystems bezüglich dessen Ist-Konfiguration und/oder Ist-Parametrierung in Reaktion auf einen erkannten Zugriff und/oder in Reaktion auf ein Signal, das ein vordefinierbar regelmäßig wiederkehrendes Signal ist.

Die vorliegende Erfindung bietet viele Vorteile. So wird z.B. der IST-Zustand der Konfiguration und/oder Parametrierung des an das Projektiergerät angebundenen Automatisierungssystems automatisch analysiert, ohne dass der Anwender dies selbst beauftragen muss. Aktuelle Informationen über die IST-Konfiguration und/oder IST-Parametrierung, die üblicher Weise eine wichtige Voraussetzung für verschiedene weitere Vorgänge im Rahmen der Projektierung sind, liegen nunmehr stets aktuell vor. Für den Anwender ist dies sehr bequem und zeitsparend. Gemäß einer vorteilhaften Weiterbildung der Erfindung ist das Projektiergerät ausgebildet zum automatischen Analysieren der Ist-Konfiguration und/oder Ist-Parametrierung im Vergleich zu der erstellten Soll-Konfiguration und/oder Soll-Parametrierung. Vorzugsweise ist das Projektiergerät zudem ausgebildet zum automatischen Präsentieren des Analyseergebnisses, insbesondere unmittelbar nach dessen Verfügbarkeit. Der Anwender wird somit frühzeitig und im Wesentlichen frühestmöglich auf etwaige Probleme hingewiesen, sei es weil ein in der Soll-Konfiguration bereits vorgesehenes Gerät in der IST-Konfiguration tatsächlich noch nicht vorhanden ist und/oder weil ein in der Soll-Parametrierung für ein bestimmtes Gerät gesetzter Parameter von dem tatsächlichen Gerät nicht unterstützt werden würde. Derlei Problemfälle kann der Anwender nunmehr bereits vor dem Kompilieren der aus der Soll-Konfiguration und/oder Soll-Parametrierung resultierenden Konfigurations- und/oder

Parametrierungsdaten erkennen und beheben.

Gemäß der Erfindung ist das Projektiergerät ausgebildet zum automatischen Segmentieren der Ist-Konfiguration und/oder Ist-Parametrierung basierend auf dem wenigstens einen verfügbaren Analyseergebnis sowie zum automatischen Analysieren einzelner Segmente der Ist-Konfiguration und/oder Ist-Parametrierung. Dies bringt eine weitere Zeitersparnis, da nur die erstmalige Analyse der Ist-Konfiguration und/oder Ist-Parametrierung vollständig erfolgen muss, während die nachfolgenden Analysen nur noch einzelne Segmente der Ist-Konfiguration und/oder Ist-Parametrierung berücksichtigen brauchen. Dies bietet sich zum Beispiel für Analysen an, die in Reaktion auf ein regelmäßig wiederkehrendes Signal ausgeführt werden, wobei insbesondere zu jedem Wiederkehren des Signals zumindest ein anderes Segment der Ist-Konfiguration und/oder Ist-Parametrierung analysiert wird. Die Segmentierung kann dabei zum Beispiel anhand von strukturellen und/oder semantischen Bedingungen erfolgen. Aber auch eine Analyse der gesamten Ist-Konfiguration und/oder Ist-Parametrierung kann dank der Segmentierung nunmehr schneller erfolgen, weil erfindungsgemäß mehrere Segmente gleichzeitig in parallelen Analyse-Threads untersucht werden können.

In einer bevorzugten Weiterbildung der Erfindung ist das Projektiergerät ausgebildet zum automatischen Segmentieren der Soll-Konfiguration und/oder Soll-Parametrierung sowie zum automatischen Zuordnen der Segmente der Ist-Konfiguration und/oder Ist-Parametrierung zu den jeweils entsprechenden Segmenten der Soll-Konfiguration und/oder Soll-Parametrierung. Ferner ist das Projektiergerät dann zweckmäßig ausgebildet zum automatischen Analysieren eines Segments der Ist-Konfiguration und/oder Ist-Parametrierung in Reaktion auf einen erkannten Zugriff auf ein diesem Segment zugeordnetes Segment der Soll-Konfiguration und/oder Soll-Parametrierung. Dies ermöglicht vorteilhafter Weise eine besonders gezielte und effiziente automatische Analyse der Ist-Konfiguration und/oder Ist-Parametrierung. In einer anderen, ergänzenden oder alternaven Weiterbildung der Erfindung ist das Projektiergerät ausgebildet zum automatischen Umwandeln von Konfigurations- und/oder Parametrierungsdaten, die aus der Soll-Konfiguration und/oder Soll-Parametrierung resultieren, in ein von den Automatisierungskomponenten interpretierbares Format, in Reaktion auf einen erkannten Zugriff oder in Reaktion auf ein Signal, das ein vordefinierbar regelmäßig wiederkehrendes Signal ist. Das automatische Umwandeln der Daten kann dabei zum Beispiel gleich nach der automatischen Analyse erfolgen, sofern diese keine Probleme in der Ist-Konfiguration und/oder IST-Parametrierung ermittelt hat. Vorteilhafter Weise stehen dann die umgewandelten Daten im interpretierbaren Format zum Laden auf die Automatisierungskomponenten bereit.

In einer besonders bevorzugten Weiterbildung der Erfindung ist das Projektiergerät ausgebildet zum automatischen Umwandeln von Konfigurations- und/oder Parametrierungsdaten, die aus zumindest einem Segment der Soll-Konfiguration und/oder Soll-Parametrierung resultieren, in ein von den Automatisierungskomponenten interpretierbares Format, in Reaktion auf einen erkannten Zugriff auf dieses zumindest eine Segment der Soll-Konfiguration und/oder Soll-Parametrierung oder in Reaktion auf ein Signal, das ein vordefinierbar regelmäßig wiederkehrendes Signal ist. Das kann insbesondere bedeuten, dass sobald der Anwender in einem Segment der Soll-Konfiguration und/oder Soll-Parametrierung eine Änderung vorgenommen hat, für dieses Segment zunächst die automatische Analyse und dann die automatische Umwandlung der Konfigurations- und/oder Parametrierungsdaten erfolgt, und anschließend die umgewandelten Daten im interpretierbaren Format zum Laden auf die Automatisierungskomponenten bereit stehen.

In einer weiteren bevorzugten Weiterbildung der Erfindung kann das Projektiergerät auch zum automatischen Laden der in das interpretierbare Format umgewandelten Konfigurations- und/oder Parametrierungsdaten auf zumindest eine Automatisierungskomponente ausgebildet sein. Somit hat zum Beispiel eine Änderung der Soll-Konfiguration und/oder Soll-Parametrierung im Wesentlichen eine direkte Auswirkung auf das tatsächliche Automatisierungssystem.

Ferner ist in einer besonders bevorzugten Weiterbildung der Erfindung das Projektiergerät auch zum automatischen Auslösen des Anwendens oder Ausführens der auf die Automatisierungskomponente geladenen Konfigurations- und/oder Parametrierungsdaten ausgebildet. Ein derartiges Projektiergerät bietet dem Anwender eine sehr enge Kopplung zwischen dem Soll- und Ist-Zustand, die in etwa vergleichbar ist mit dem Betätigen eines Lichtschalters und der Erwartungshaltung den Anwenders, eine möglichst kurze Wartezeit bis zur wahrnehmbaren Auswirkung der Aktion zu haben.

Vorzugsweise ist in einer Weiterbildung der Erfindung vorgesehen, dass die Funktionalität des Projektiergeräts zum Konfigurieren und/oder Parametrieren von Automatisierungskomponenten eines Automatisierungssystems als Software-Komponente eines Engineeringwerkzeugs ausgebildet ist.

Diese und weitere Merkmale der vorliegenden Erfindung ergeben sich auch aus dem Ausführungsbeispiel, welches nachfolgend unter Bezugnahme auf die beiliegenden Zeichnungen näher erläutert wird.

Es zeigt dabei
- Figur 1: ein schematisch dargestelltes Automatisierungssystem mit einer Steuerung und zwei Geräten die über ein Netzwerk miteinander und mit einem Projektiergerät gemäß der Erfindung verbunden sind, und
- Figur 2: eine schematische Darstellung mehrerer von dem erfindungsgemäßen Projektiergerät parallel ausgeführter Threads.

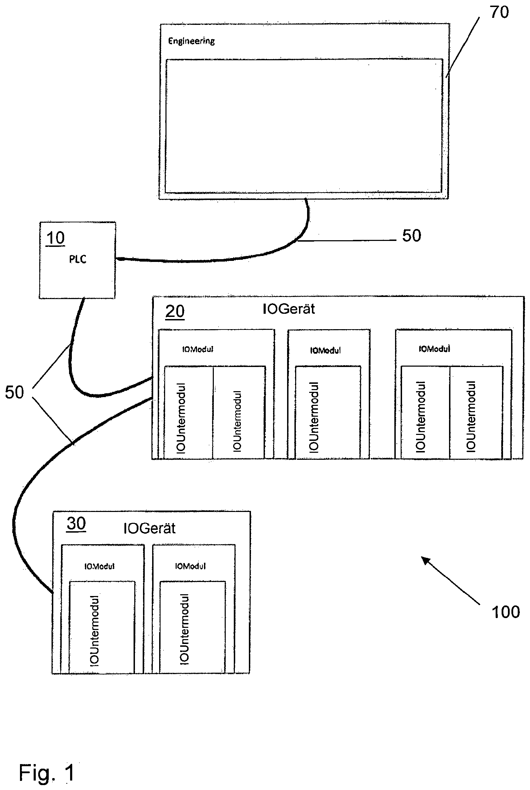

Die Figur 1 zeigt ein Automatisierungssystem 100 mit den Automatisierungskomponenten 10, 20 und 30. Mittels des Automatisierungssystems 100 sollen innerhalb einer nicht näher gezeigten Produktionsanlage verschiedene Fertigungsschritte automatisiert werden. Als Automatisierungskomponenten kommen dabei die Steuerung 10 sowie die Geräte 20 und 30 zum Einsatz, die über ein Netzwerk 50, z.B. über ein PROFINET-Netzwerk miteinander vernetzt sind.

Das als Engineeringwerkzeug ausgebildete Projektiergerät 70 ist mittels einer nicht näher gezeigten Netzwerkschnittstelle ebenfalls an das Netzwerk 50 angeschlossen. In dem dargestellten Beispiel kann mit dem Projektiergerät 70 das Automatisierungssystem 100 und insbesondere seine Komponenten 10, 20 und 30 sowie insbesondere auch das Netzwerk 50 konfiguriert und parametriert werden. Dafür werden beispielsweise die verwendeten Gerätetypen definiert. Es wird eine Vielzahl an Einstellungen getroffen, die das Netzwerk 50, die Steuerung 10 oder die Geräte 20 bzw. 30 betreffen können.

Damit die Produktionsanlage in Betrieb gehen kann, muss die mit dem Projektiergerät 70 erstellte Soll-Konfiguration und/oder Soll-Parametrierung letztendlich auf die Automatisierungskomponenten übertragen werden. Dafür ist es notwendig, die aus der Soll-Konfiguration und/oder Soll-Parametrierung resultierenden Konfigurations- und/oder Parametrierungsdaten in ein zum Beispiel für die Steuerung 10 verständliches Format zu überführen. Um den einwandfreien Betrieb des Automatisierungssystems sicherzustellen, wird dabei auch eine ausführliche Analyse der IST-Konfiguration und/oder IST-Parametrierung des Automatisierungssystems 100 durchgeführt.

Nachdem die Produktionsanlage mit dem Automatisierungssystem 100 erstmalig in Betrieb genommen wurde, fällt dem Anwender (nicht näher gezeigt) während des Betriebs z.B. eine erhöhte Netzlast in dem Netzwerk 50 auf, die er gerne verringern möchte. Als Maßnahme entscheidet er beispielsweise, für das Gerät 20 die Aktualisierungszeit von 1 ms auf 16 ms zu ändern, da dies für den auf der Produktionsanlage laufenden Fertigungsprozess unkritisch ist. Mittels des Projektiergeräts 70 nimmt der Anwender eine entsprechende Änderung der Soll-Parametrierung vor. In Reaktion auf diesen Zugriff seitens des Anwenders auf die Soll-Parametrierung löst das Projektiergerät automatisch eine erneute Analyse der Ist-Konfiguration und/oder IST-Parametrierung in Bezug auf die Soll-Parametrierung aus und führt diese durch. Da während der Analyse keine Probleme ermittelt wurden, kompiliert das Projektiergerät 70 die aus der Soll-Parametrierung resultierenden Parameterdaten automatisch in ein für das Gerät 20 geeignetes Datenformat und lädt die kompilierten Daten anschließend ebenfalls automatisch auf das Gerät 20 und löst dort das Ausführen der Daten seitens des Geräts 20 aus.

Dank des erfindungsgemäßen Projektiergeräts 70 kann die vom Anwender vorgenommene Änderung innerhalb kurzer Zeit bereits auf dem Gerät 20 wirken, und der Anwender konnte das Ziel der verringerten Netzlast erreichen.

In anderen Fällen kann es bei den Änderungen beispielsweise um das Hinzufügen oder Entfernen von Geräteinstanzen, das Verschieben von Geräteinstanzen an eine andere Position im Netzwerk oder auch das Ändern von Geräteeigenschaften und Einstellungen handeln. Selbstverständlich können mit dem Projektiergerät 70 auch komplexe Zusammenhänge, wie TCP/IP-Einstellungen innerhalb eines Subnetzes, die Betreibbarkeit des Netzwerks 50, welches z.B. auch eine Kombination von verschieden Feldbussen umfassen kann, aufgrund der zur Verfügung gestellten Stromabgabe in Zusammenhang mit der erwarteten Stromaufnahme, die Betreibbarkeit anhand von CPU-Leistung der Steuerung und vieles mehr analysiert werden.

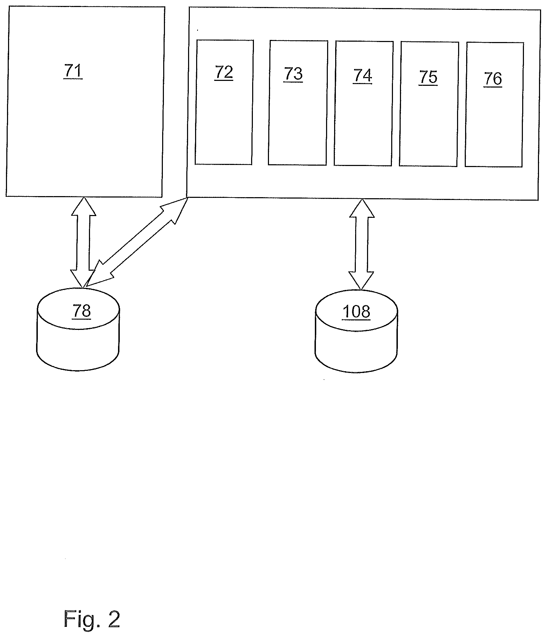

Die Figur 2 zeigt eine schematische Darstellung mehrerer von dem erfindungsgemäßen Projektiergerät parallel ausgeführter Threads 71 bis 76. Das Projektiergerät selbst ist hierbei nicht gezeigt. Es ist jedoch gemäß einer bevorzugten Weiterbildung dazu ausgebildet, sowohl die Ist-Konfiguration und/oder IST-Parametrierung als auch die Soll-Konfiguration und/oder Soll-Parametrierung in jeweils mehrere Segmente zu unterteilen. Das automatische Analysieren von Konfigurationen und/oder Parametrierungen, das Kompilieren von Konfigurations- und/oder Parametrierungsdaten sowie das Übertragen der kompilierten Daten muss dabei nicht mehr stets für die gesamte Konfiguration und/oder Parametrierung erfolgen sondern kann sich gezielt auf einzelne oder mehrere Segmente beziehen. Dieses Segmentweise Analysieren, Kompilieren und/oder Übertragen kann dabei von dem Projektiergerät vorzugsweise in mehreren parallelen Threads ausgeführt werden.

Bei dem in Figur 2 gezeigten Thread 71 handelt es sich beispielhaft um den Thread zur Bereitstellung der Benutzerschnittstelle des Projektiergräts. Die Threads 72 und 73 betreffen beispielhaft das Analysieren verschiedener Segmente der Konfiguration und/oder Parametrierung. Die Threads 74 und 75 betreffen beispielhaft das Kompilieren von segmentbezogenen Konfigurations- und/oder Parametrierungsdaten, während der Thread 76 beispielhaft das Übertragen von kompilierten Daten betrifft. Die Anzahl und Aufteilung der Threads kann selbstverständlich auch anders ausgestaltet sein und sich insbesondere dynamisch ändern, je nach dem welche Konfigurations- und/oder Parametrierungsaufgaben mit bzw. von dem Projektiergerät zu erledigen sind.

Mit dem Datenpool 108 soll in der Figur 2 die gesamte Ist-Konfiguration und/oder Ist-Parametrierung des Automatisierungssystems 100 angedeutet sein, auf die das Projektiergerät zum Beispiel während einer Analyse lesend oder während des Ladens von neuen Daten auf eine Automatisierungskomponente schreibend Zugriff hat.

Analog dazu soll mit dem Datenpool 78 die gesamte Soll-Konfiguration und/oder Soll-Parametrierung angedeutet sein, die mittels des Projektiergeräts erstellt wurde und zum Bearbeiten, Kompilieren oder übertragen bereitsteht.

### Bezugszeichenliste

- 10: Steuerung
- 20: Gerät
- 30: Gerät
- 50: Netzwerk
- 70: Projektiergerät
- 71-76: Threads
- 78: Datenpool
- 100: Automatisierungssystem
- 108: Datenpool

## Patentansprüche

1. Projektiergerät (70) zum Konfigurieren und/oder Parametrieren von Automatisierungskomponenten (10, 20, 30) eines Automatisierungssystems (100),
mit einer Benutzerschnittstelle und einer Netzwerkschnittstelle,
wobei das Projektiergerät
- zum Erstellen einer Soll-Konfiguration und/oder Soll-Parametrierung für ein Automatisierungssystem geeignet ist,
- zum automatischen Erkennen von Zugriffen auf die Soll-Konfiguration und/oder die Soll-Parametrierung anhand vordefinierbarer Zugriffsarten ausgebildet ist,
- über die Netzwerkschnittstelle an ein Netzwerk (50) eines tatsächlichen Automatisierungssystem (100) anbindbar ist,
- zum Analysieren eines angebundenen tatsächlichen Automatisierungssystems (100) bezüglich dessen Ist-Konfiguration und/oder Ist-Parametrierung geeignet ist, und
- zum automatischen Auslösen und Durchführen des Analysierens in Reaktion auf einen erkannten Zugriff und/oder in Reaktion auf ein Signal, das ein vordefinierbar regelmäßig wiederkehrendes Signal ist, ausgebildet ist;
**dadurch gekennzeichnet, dass** das Projektiergerät
- zum automatischen Segmentieren der Ist-Konfiguration und/oder Ist-Parametrierung basierend auf einem verfügbaren Analyseergebnis des Analysierens und zum automatischen Analysieren einzelner Segmente der Ist-Konfiguration und/oder Ist-Parametrierung ausgebildet ist, und
- ausgebildet ist, mehrere Segmente der Ist-Konfiguration und/oder Ist-Parametrierung gleichzeitig in parallelen Analyse-Threads (72, 73) zu untersuchen.

2. Projektiergerät nach dem vorherigen Anspruch, welches zum automatischen Analysieren der Ist-Konfiguration und/oder Ist-Parametrierung im Vergleich zu der erstellten Soll-Konfiguration und/oder Soll-Parametrierung ausgebildet ist.

3. Projektiergerät nach einem oder mehreren der vorherigen Ansprüche, welches zum automatischen Präsentieren des Analyseergebnisses ausgebildet ist.

4. Projektiergerät nach einem oder mehreren der vorherigen Ansprüche, welches zum automatischen Segmentieren der Soll-Konfiguration und/oder Soll-Parametrierung basierend auf dem verfügbaren Analyseergebnis ausgebildet ist.

5. Projektiergerät nach dem vorherigen Anspruch, welches zum automatischen Zuordnen der Segmente der Ist-Konfiguration und/oder Ist-Parametrierung zu den jeweils entsprechenden Segmenten der Soll-Konfiguration und/oder Soll-Parametrierung ausgebildet ist, und welches ausgebildet ist zum automatischen Analysieren eines Segments der Ist-Konfiguration und/oder Ist-Parametrierung in Reaktion auf einen erkannten Zugriff auf ein diesem Segment zugeordnetes Segment der Soll-Konfiguration und/oder Soll-Parametrierung.

6. Projektiergerät nach einem oder mehreren der vorherigen Ansprüche, welches ausgebildet ist zum automatischen Umwandeln von Konfigurations- und/oder Parametrierungsdaten, die aus der Soll-Konfiguration und/oder Soll-Parametrierung resultieren, in ein von den Automatisierungskomponenten interpretierbares Format, in Reaktion auf einen erkannten Zugriff oder in Reaktion auf ein Signal, das ein vordefinierbar regelmäßig wiederkehrendes Signal ist.

7. Projektiergerät nach einem oder mehreren der vorherigen Ansprüche, welches ausgebildet ist zum automatischen Umwandeln von Konfigurations- und/oder Parametrierungsdaten, die aus zumindest einem Segment der Soll-Konfiguration und/oder Soll-Parametrierung resultieren, in ein von den Automatisierungskomponenten interpretierbares Format, in Reaktion auf einen erkannten Zugriff auf dieses zumindest eine Segment der Soll-Konfiguration und/oder Soll-Parametrierung oder in Reaktion auf ein Signal, das ein vordefinierbar regelmäßig wiederkehrendes Signal ist.

8. Projektiergerät nach einem der zwei vorherigen Ansprüche, welches zum automatischen Laden der in das interpretierbare Format umgewandelten Konfigurations- und/oder Parametrierungsdaten auf zumindest eine Automatisierungskomponente ausgebildet ist.

9. Projektiergerät nach dem vorherigen Anspruch, welches zum automatischen Auslösen eines Anwendens oder Ausführens der auf die Automatisierungskomponente geladenen Konfigurations- und/oder Parametrierungsdaten ausgebildet ist.

10. Projektiergerät nach einem oder mehreren der Ansprüche 6 bis 9, welches ausgebildet ist, das Kompilieren von Konfigurations- und/oder Parametrierungsdaten und/oder Übertragen der kompilierten Daten segmentweise und in mehreren parallelen Threads (74, 75, 76) auszuführen.

11. Projektiergerät nach dem vorherigen Anspruch,
**dadurch gekennzeichnet, dass** sich die Anzahl und Aufteilung der Threads in Abhängigkeit der mit bzw. von dem Projektiergerät zu erledigenden Konfigurations- und/oder Parametrierungsaufgaben dynamisch ändern kann.

12. Projektiergerät nach einem oder mehreren der vorhergehenden Ansprüche,
**dadurch gekennzeichnet, dass** die Funktionalität zum Konfigurieren und/oder Parametrieren von Automatisierungskomponenten eines Automatisierungssystem als Software-Komponente eines Engineeringwerkzeugs ausgebildet ist.

13. Verfahren zum Konfigurieren und/oder Parametrieren von Automatisierungskomponenten (10, 20, 30) eines Automatisierungssystems (100) mittels des Projektiergeräts (70) nach einem oder mehreren der Ansprüche 1 bis 12, umfassend die Schritte:
- Anbinden eines Netzwerk (50) eines tatsächlichen Automatisierungssystems (100) an das Projektiergerät,
- Erstellen einer Soll-Konfiguration und/oder Soll-Parametrierung für das angebundene tatsächliche Automatisierungssystem,
- automatisches Erkennen von Zugriffen auf die Soll-Konfiguration und/oder die Soll-Parametrierung anhand vordefinierter Zugriffsarten,
- automatisches Auslösen und Durchführen des Analysierens des angebundenen tatsächlichen Automatisierungssystems bezüglich dessen Ist-Konfiguration und/oder Ist-Parametrierung in Reaktion auf einen erkannten Zugriff und/oder in Reaktion auf ein Signal, das ein vordefinierbar regelmäßig wiederkehrendes Signal ist;
**dadurch gekennzeichnet, dass**
die Ist-Konfiguration und/oder Ist-Parametrierung basierend auf einem verfügbaren Analyseergebnis des Analysierens automatisch segmentiert werden, und einzelne Segmente der Ist-Konfiguration und/oder Ist-Parametrierung automatisch analysiert werden, wobei mehrere Segmente der Ist-Konfiguration und/oder Ist-Parametrierung gleichzeitig in parallelen Analyse-Threads (72, 73) untersucht werden.

## Claims

1. Projecting device (70) for configuring and/or parameterizing automation components (10,20, 30) of an automation system (100), with a user interface and a network interface,
wherein the projecting device
- is suitable for creating a target configuration and/or target parameterization for an automation system ,
- is designed for automatic recognition of accesses to the target configuration and/or the target parameterization on the basis of predefinable access types,
- is connectable via the network interface to a network (50) of an actual automation system (100),
- is suitable for analyzing a connected actual automation system (100) with regard to its actual configuration and/or actual parameterization, and
- is adapted to automatically trigger and perform the analyzing in response to a detected access and/or in response to a signal which is a predefinable regularly recurring signal; **characterized in that** the projecting device
- is adapted for automatically segmenting the actual configuration and/or actual parameterization on the basis of an available analysis result of the analyzing and for the automatically analyzing individual segments of the actual configuration and/or actual parameterization, and
- is designed to analyze several segments of the actual configuration and/or actual parameterization simultaneously in parallel analysis threads (72, 73).

2. Projecting device according to the previous claim, which is designed to automatically analyze the actual configuration and/or actual parameterization in comparison with the created target configuration and/or target parameterization.

3. Projecting device according to one or more of the preceding claims, which is designed for automatic presentation of the analysis result.

4. Projecting device according to one or more of the preceding claims, which is designed for automatic segmentation of the target configuration and/or target parameterization based on the available analysis result.

5. Projecting device according to the previous claim, which is used for automatically assigning the segments of the actual configuration and/or actual parameterization to the corresponding segments of the target configuration and/or target parameterization, and which is designed to automatically analyze a segment of the actual configuration and/or actual parameterization in response to a detected access to a segment of the target configuration and/or target parameterization assigned thereto.

6. Projecting device according to one or more of the preceding claims, which is adapted to automatically convert configuration and/or parameterization data resulting from the target configuration and/or target parameterization into a format interpretable by the automation components, in response to a detected access or in response to a signal which is a predefinable regularly recurring signal.

7. Projecting device according to one or more of the preceding claims, which is designed to automatically convert configuration and/or parameterization data resulting from at least one segment of the target configuration and/or target parameterization into a format which can be interpreted by the automation components, in response to a detected access to this at least one segment of the target configuration and/or target parameterization or in response to a signal which is a predefinable regularly recurring signal.

8. Projecting device according to one of the two preceding claims, which is designed for automatic loading of the configuration and/or parameterization data converted into the interpretable format onto at least one automation component.

9. Projecting device according to the previous claim, which is used for automatically triggering an application or execution of the configuration and/or parameterization data loaded onto the automation component.

10. Projecting device according to one or more of the claims 6 to 9, which is designed to perform the compilation of configuration and/or parameterization data and/or the transmission of the compiled data segment by segment and in several parallel threads (74, 75, 76).

11. Projecting device according to the previous claim, **characterized in that** the number and distribution of the threads can change dynamically as a function of the configuration and/or parameterization tasks to be performed with or by the projecting device.

12. Projecting device according to one or more of the preceding claims, **characterized in that** the functionality for configuring and/or parameterizing automation components of an automation system is designed as a software component of an engineering tool.

13. Method for configuring and/or parameterizing automation components (10, 20, 30) of an automation system (100) by means of the projecting device (70) according to one or more of claims 1 to 12, comprising the steps:
- Connecting a network (50) of an actual automation system (100) to the projecting device,
- Creating of a target configuration and/or target parameterization for the connected actual automation system,
- automatic recognizing of accesses to the target configuration and/or the target parameterization on the basis of predefined access modes,
- automatic triggering and executing of the analysing of the connected actual automation system with respect to its actual configuration and/or actual parameterization in response to a detected access and/or in response to a signal which is a predefinable regularly recurring signal;
**characterized in that**
the actual configuration and/or actual parameterization are segmented automatically based on an available analysis result of the analyzing, and individual segments of the actual configuration and/or actual parameterization are analyzed automatically, wherein several segments of the actual configuration and/or actual parameterization are analyzed simultaneously in parallel analysis threads (72, 73).

## Revendications

1. Appareil de projection (70) destiné à configurer et/ou paramétrer des composantes d'automatisation (10, 20, 30) d'un système d'automatisation (100) avec une interface utilisateur et une interface réseau,
dans lequel l'appareil de projection
- est adapté pour établir une configuration de consigne et/ou un paramétrage de consigne pour un système d'automatisation,
- est conçu pour reconnaître automatiquement des accès à la configuration de consigne et/ou au paramétrage de consigne à l'aide de types d'accès pouvant être prédéfinis,
- peut être relié via l'interface réseau à un réseau (50) d'un système d'automatisation (100) effectif,
- est adapté pour analyser un système d'automatisation (100) effectif relié quant à sa configuration réelle et/ou à son paramétrage réel, et
- est conçu pour déclencher et réaliser automatiquement l'analyse en réaction à un accès reconnu et/ou en réaction à un signal qui est un signal revenant régulièrement et pouvant être prédéfini ;
**caractérisé en ce que** l'appareil de projection
- est conçu pour segmenter automatiquement la configuration réelle et/ou le paramétrage réel sur la base d'un résultat d'analyse disponible de l'analyse et pour analyser automatiquement des segments individuels de la configuration réelle et/ou du paramétrage réel, et
- est conçu pour étudier, simultanément dans des Processus d'Analyse (72, 73) parallèles, plusieurs segments de la configuration réelle et/ou du paramétrage réel.

2. Appareil de projection selon la revendication précédente, lequel est conçu pour analyser automatiquement la configuration réelle et/ou le paramétrage réel par comparaison avec la configuration de consigne et/ou le paramétrage de consigne établis.

3. Appareil de projection selon une ou plusieurs des revendications précédentes, lequel est conçu pour présenter automatiquement le résultat d'analyse.

4. Appareil de projection selon une ou plusieurs des revendications précédentes, lequel est conçu pour segmenter automatiquement la configuration de consigne et/ou le paramétrage de consigne sur la base du résultat d'analyse disponible.

5. Appareil de projection selon la revendication précédente, lequel est conçu pour attribuer automatiquement les segments de la configuration réelle et/ou du paramétrage réel aux segments correspondants respectifs de la configuration de consigne et/ou du paramétrage de consigne, et lequel est conçu pour analyser automatiquement un segment de la configuration réelle et/ou du paramétrage réel en réaction à un accès reconnu à un segment attribué à ce segment de la configuration de consigne et/ou du paramétrage de consigne.

6. Appareil de projection selon une ou plusieurs des revendications précédentes, lequel est conçu pour convertir automatiquement des données de configuration et/ou de paramétrage, qui résultent de la configuration de consigne et/ou du paramétrage de consigne, en un format pouvant être interprété par les composantes d'automatisation, en réaction à un accès reconnu ou en réaction à un signal qui est un signal revenant régulièrement et pouvant être prédéfini.

7. Appareil de projection selon une ou plusieurs des revendications précédentes, lequel est conçu pour convertir automatiquement des données de configuration et/ou de paramétrage, qui résultent d'au moins un segment de la configuration de consigne et/ou du paramétrage de consigne, en un format pouvant être interprété par les composantes d'automatisation, en réaction à un accès reconnu à ce au moins un segment de la configuration de consigne et/ou du paramétrage de consigne ou en réaction à un signal qui est un signal revenant régulièrement et pouvant être prédéfini.

8. Appareil de projection selon l'une des deux revendications précédentes, lequel est conçu pour charger automatiquement les données de configuration et/ou de paramétrage converties dans le format pouvant être interprété sur au moins une composante d'automatisation.

9. Appareil de projection selon la revendication précédente, lequel est conçu pour déclencher automatiquement une utilisation ou une exécution des données de configuration et/ou de paramétrage chargées sur la composante d'automatisation.

10. Appareil de projection selon une ou plusieurs des revendications 6 à 9, lequel est conçu pour exécuter la compilation de données de configuration et/ou de paramétrage et/ou transférer les données compilées de façon segmentée et dans plusieurs Processus (74, 75, 76) parallèles.

11. Appareil de projection selon la revendication précédente, **caractérisé en ce que** le nombre et la répartition des Processus peut se modifier dynamiquement en fonction des tâches de configuration de consigne et/ou de paramétrage à effectuer avec ou par l'appareil de projection.

12. Appareil de projection selon une ou plusieurs des revendications précédentes,
**caractérisé en ce que** la fonctionnalité pour configurer et/ou paramétrer des composantes d'automatisation d'un système d'automatisation est conçue en tant que composante-logiciel d'un outil d'ingénierie.

13. Procédé destiné à configurer et/ou paramétrer des composantes d'automatisation (10, 20, 30) d'un système d'automatisation (100) au moyen de l'appareil de projection (70) selon une ou plusieurs des revendications 1 à 12, comprenant les étapes consistant à :
- relier un réseau (50) d'un système d'automatisation (100) effectif à l'appareil de projection,
- établir une configuration de consigne et/ou un paramétrage de consigne pour le système d'automatisation effectif relié,
- reconnaître automatiquement des accès à la configuration de consigne et/ou au paramétrage de consigne à l'aide de types d'accès prédéfinis,
- déclencher et réaliser automatiquement l'analyse du système d'automatisation effectif relié quant à sa configuration réelle et/ou à son paramétrage réel en réaction à un accès reconnu et/ou en réaction à un signal qui est un signal revenant régulièrement et pouvant être prédéfini ; **caractérisé en ce que**
- la configuration réelle et/ou le paramétrage réel sont automatiquement augmentés sur la base d'un résultat d'analyse disponible de l'analyse, et des segments individuels de la configuration réelle et/ou du paramétrage réel sont automatiquement analysés, dans lequel plusieurs segments de la configuration réelle et/ou du paramétrage réel sont étudiés simultanément dans des Processus d'Analyse (72, 73) parallèles.
